(19) Europäisches Patentamt
European Patent Office
Office européen des brevets

(11) **EP 4 345 975 A2**

(12) **EUROPEAN PATENT APPLICATION**

(43) Date of publication:
**03.04.2024 Bulletin 2024/14**

(21) Application number: 23193280.7

(22) Date of filing: **24.08.2023**

(51) International Patent Classification (IPC):
**H01M 10/058** (2010.01)    **H01M 50/10** (2021.01)

(52) Cooperative Patent Classification (CPC):
**H01M 10/058; H01M 50/10**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **01.09.2022 JP 2022139559**

(71) Applicant: **TOYOTA JIDOSHA KABUSHIKI KAISHA**
**Toyota-shi, Aichi-ken, 471 8571 (JP)**

(72) Inventor: **CHIHARA, Masashi**
**Toyota-shi, 471-8571 (JP)**

(74) Representative: **D Young & Co LLP**
**120 Holborn**
**London EC1N 2DY (GB)**

(54) **BATTERY, BATTERY MODULE, AND METHOD OF MANUFACTURING BATTERY**

(57)    A battery, including: an electrode body; a side face member; and a laminate film covering the electrode body and the side face member, in which: in a case in which the battery is viewed laterally from a side of the side face member, an outer edge of the side face member is positioned further toward an inner side than an outer edge of the electrode body, the laminate film is disposed so as to cover a face configuring the outer edge of the side face member and a face configuring the outer edge of the electrode body, a fused part X, at which respective inner faces of the laminate film are fused together, is disposed on the side face member, and a bent part at a starting point of the fused part X at a side of the side face member has a curved shape.

## FIG.1A

EP 4 345 975 A2

**Description**

BACKGROUND

Technical Field

The present disclosure relates to a battery, a battery module, and a method of manufacturing a battery.

Related Art

A battery such as a lithium-ion secondary battery is usually provided with an electrode body having a positive electrode current collector, a positive electrode active material layer, an electrolyte layer, a negative electrode active material layer, and a negative electrode current collector. The electrode body is sealed, for example, in an internal space surrounded by an exterior material. Japanese Patent Application Laid-Open (JP-A) No. 2011-108623 discloses a lithium polymer secondary battery including an electrode assembly, an exterior material surrounding an exterior of the electrode assembly, and first and second covers sealing the exterior material, and in which a first electrode terminal and a second electrode terminal were drawn out to the exterior via the first cover and the second cover, respectively. Furthermore, Japanese Patent Application Laid-Open (JP-A) No. 2011-108623 describes a laminate film as an exterior material.

SUMMARY

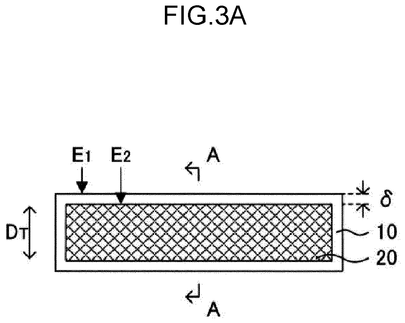

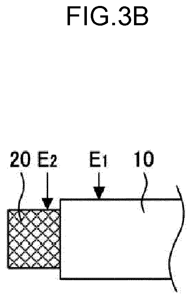

As shown in Figs. 3A and 3B, which are discussed below, there are cases in which the dimensions of a side face member are configured smaller than the dimensions of the electrode body. In a case of sealing, with a laminate film, a side face member having this kind of dimensional relationship, there is a method in which an excess portion of a region of a laminate film covering the side face member is folded and inner surfaces thereof are fused together to form a fused part, whereby sealing is effected. However, there have been cases in which the laminate film has been damaged at the bent part at the starting point of the fused part at the side of the side face member.
The present disclosure has been made in view of the foregoing circumstances, and aims to provide a battery, a battery module having the battery, and a method of manufacturing the battery, with which damage at the bent part in the laminate film at the starting point of the fused part at the side of the side face member is suppressed.
A battery of a first aspect of the present disclosure, comprising: an electrode body; a side face member disposed at a side face of the electrode body; and a laminate film covering the electrode body and the side face member, wherein: in a case in which the battery is viewed laterally from a side of the side face member, an outer edge of the side face member is disposed further toward an inner side than an outer edge of the electrode body, the laminate film is disposed so as to cover a face configuring the outer edge of the side face member and a face configuring the outer edge of the electrode body, a fused part, at which respective inner faces of the laminate film are fused together, is disposed on the side face member, and a bent part at a starting point of the fused part at a side of the side face member has a curved shape.
A battery of a second aspect according to the present disclosure is the battery of the first aspect, wherein the laminate film has a metal layer and a fusing resin layer at an inner face side that forms the fused part, and the side face member has a coating resin layer at a face that contacts the laminate film.
A battery of a third aspect according to the present disclosure is the battery of the second aspect, wherein a radius of curvature R of the curved shape in the bent part satisfies the following Formula (1) and Formula (3):

$$\text{Formula (1): } R < (((2\Delta t(a+b+4t_1))/(4-\pi))^{1/2})-r$$

$$\text{Formula (3): } R < b/2$$

wherein, in the Formula (1) and the Formula (3):

a is a width of the side face member (mm),
b is a thickness of the side face member (mm),
$t_i$ is a sum of an average thickness of the fusing resin layer and an average thickness of the coating resin layer prior to fusion (mm),
$t_2$ is a sum of an average thickness of the fusing resin layer and an average thickness of the coating resin layer after fusion at the fused part,
$\Delta t$ is equal to $t_i$ - $t_2$,

r is an average thickness of the laminate film, and
R is the radius of curvature of the curved shape in the bent part.

A battery of a fourth aspect according to the present disclosure is the battery of the second aspect or the third aspect, wherein a radius of curvature R of the curved shape in the bent part satisfies the following Formula (2) and Formula (3):

$$\text{Formula (2): } R < (((((a+2t_1)(b+2t_1)-ab)\times 0.05)/(4-\pi))^{1/2})-r$$

$$\text{Formula (3): } R < b/2$$

wherein, in the Formula (2) and the Formula (3):

a is a width of the side face member (mm),
b is a thickness of the side face member (mm),
$t_i$ is a sum of an average thickness of the fusing resin layer and an average thickness of the coating resin layer prior to fusion (mm),
r is an average thickness of the laminate film, and
R is the radius of curvature of the curved shape in the bent part.

A battery of a fifth aspect according to the present disclosure is the battery of any one of the second aspect to the fourth aspect, wherein a radius of curvature R of the curved shape in the bent part is equal to or greater than an average thickness of the metal layer.

A battery of a sixth aspect according to the present disclosure is the battery of any one of the first aspect to the fifth aspect, wherein the fused part does not have a folding crease mark at a region other than the bent part.

A battery of a seventh aspect according to the present disclosure is the battery of any one of the first aspect to the sixth aspect, wherein, in a case in which the battery is viewed in plan view from a thickness direction, the fused part is disposed continuously from an end part position $\alpha$ of the laminate film at the side of the side face member to a position $\beta$ of the laminate film corresponding to a boundary between the side face member and the electrode body.

A battery of an eighth aspect according to the present disclosure is the battery of any one of the first aspect to the seventh aspect, wherein the fused part is disposed at a corner part of the outer edge of the side face member.

A battery of a ninth aspect according to the present disclosure is the battery of any one of the first aspect to the eighth aspect, wherein, in a case in which the battery is viewed laterally from the side of the side face member, a shape of the side face member is rectangular.

A battery of a tenth aspect according to the present disclosure is the battery of any one of the first aspect to the ninth aspect, wherein a plurality of the fused parts is disposed on the side face member.

A battery of an eleventh aspect according to the present disclosure is the battery of any one of the first aspect to the tenth aspect, wherein the side face member is a current collection terminal.

A battery of a twelfth aspect according to the present disclosure is the battery of any one of the first aspect to the eleventh aspect, wherein the battery comprises a pair of the side face members, and the pair of the side face members is disposed so as to oppose each other relative to the electrode body.

A battery module of a thirteenth aspect according to the present disclosure, comprising the battery of any one of the first aspect to the twelfth aspect, wherein a plurality of the batteries is layered in a thickness direction thereof.

A battery module of a fourteenth aspect according to the present disclosure is the battery module of the thirteenth aspect, wherein, in a pair of the side face members disposed adjacent to each other in the thickness direction, a main face part of the laminate film disposed on one of the pair of side face members does not contact a main face part of the laminate film disposed on the other of the pair of side face members.

A method of manufacturing a battery of a fifteenth aspect according to the present disclosure, the method comprising:

a preparation process of preparing a structure comprising the electrode body and the side face member, wherein, in a case in which the battery is viewed laterally from a side of the side face member, a shape of the side face member is a rectangular shape and the rectangular shape has a first side, a second side adjacent the first side, a third side adjacent the second side and opposing the first side, and a fourth side adjacent the third side and opposing the second side;
a first covering process of covering a face configuring the outer edge of the electrode body in the structure with the laminate film; and

a second covering process of covering a face configuring the outer edge of the side face member in the structure with the laminate film, wherein:

the second covering process comprises:

a first adhesion process of pressing a first jig and a third jig inward from a side of the first side and a side of the third side of the side face member, respectively, and adhering the laminate film to the first side and the third side, respectively; and

after the first adhesion process, a second adhesion process of pressing a second jig and a fourth jig inward from a side of the second side and a side of the fourth side of the side face member, respectively, and adhering the laminate film to the second side and the fourth side, respectively,

at least one of the first jig or the third jig has a chamfered shape at a portion that forms the curved shape of the bent part in the fused part, and

the battery is the battery of any one of the first aspect to the twelfth aspect.

A method of manufacturing a battery of a sixteenth aspect according to the present disclosure is the method of manufacturing a battery of the fifteenth aspect, further comprising, after the preparation process and before the first covering process, a folding process of providing in advance a fold line at a position of the laminate film opposing a corner part of the electrode body,

wherein, in the folding process, the fold line is not provided at a position of the laminate film opposing the side face member.

Effects of the Invention

According to the present disclosure, it is possible to provide a battery in which damage at the bent part at the starting point of the fused part at the side of the side face member in the laminate film is suppressed, a battery module having the battery, and a method of manufacturing the battery.

BRIEF DESCRIPTION OF THE DRAWINGS

Fig. 1A is a schematic perspective view illustrating an electrode body of the present disclosure.
Fig. 1B is a schematic perspective view illustrating the electrode body and side face members of the present disclosure.
Fig. 2A is a schematic perspective view illustrating a state of the electrode body, the side face members, and a laminate film of the present disclosure prior to sealing.
Fig. 2B is a schematic perspective view illustrating a state of the electrode body, the side face members, and the laminate film of the present disclosure after sealing.
Fig. 3A is a schematic side view illustrating the electrode body and a side face member of the present disclosure.
Fig. 3B is a schematic cross-sectional view illustrating the electrode body and the side face member of the present disclosure.
Fig. 3C is a schematic side view illustrating the electrode body, the side face member, and the laminate film of the present disclosure.
Fig. 3D is a schematic cross-sectional view illustrating the electrode body, the side face member, and the laminate film of the present disclosure.
Fig. 4 is a schematic side view illustrating a part of the battery of the present disclosure.
Fig. 5 is a schematic side view illustrating a part of the battery of the present disclosure.
Fig. 6 is a schematic cross-sectional view illustrating a part of the battery of the present disclosure.
Fig. 7 is a schematic plan view illustrating a part of the battery of the present disclosure.
Fig. 8A is a schematic cross-sectional view illustrating a part of the battery of the present disclosure.
Fig. 8B is a schematic cross-sectional view illustrating a part of the battery of the present disclosure.
Fig. 9A is a schematic side view illustrating a part of the battery of the present disclosure.
Fig. 9B is a schematic side view illustrating a part of the battery of the present disclosure.
Fig. 9C is a schematic side view illustrating a part of the battery of the present disclosure.
Fig. 10 is a schematic cross-sectional view illustrating the electrode body of the present disclosure.
Fig. 11 is a schematic perspective view illustrating a battery module of the present disclosure.

Fig. 12 is a schematic cross-sectional view illustrating the battery module of the present disclosure.
Fig. 13 is a schematic plan view illustrating the laminate film of the present disclosure.
Fig. 14A is a schematic side view illustrating a second covering process of the present disclosure.
Fig. 14B is a schematic side view illustrating the second covering process of the present disclosure.
Fig. 14C is a schematic side view illustrating the second covering process of the present disclosure.

DETAILED DESCRIPTION

Hereinafter, a battery according to the present disclosure will be described in detail with reference to the drawings. The drawings shown below are schematically shown, and the sizes and shapes of the respective parts have been appropriately exaggerated for ease of understanding. Furthermore, in the present specification, when expressing an aspect in which a given member is arranged with respect to another member, when simply indicated as "above" or "below", unless otherwise specified, a case in which the given member is placed directly above or below the other member so as to contact the other member and a case in which the given member is placed above or below the other member via a further member are both included.

A. Battery

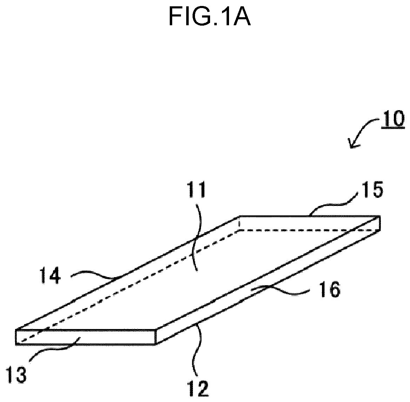

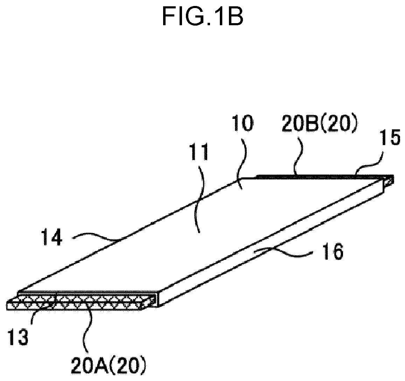

Figs. 1A and 1B are schematic perspective views illustrating the electrode body and the side face members of the present disclosure. The electrode body 10 shown in Fig. 1A has a top surface part 11, a bottom surface part 12 opposing the top surface part 11, and four side surface parts connecting the top surface part 11 to the bottom surface part 12 (first side surface part 13, second side surface part 14, third side surface part 15, and fourth side surface part 16). Furthermore, in Fig. 1B, a first side face member 20A is arranged at the first side surface part 13 of the electrode body 10. A second side face member 20B is arranged at the third side surface part 15 of the electrode body 10. As an example, the first side face member 20A is a positive electrode current collection terminal, and the second side face member 20B is a negative electrode current collection terminal.

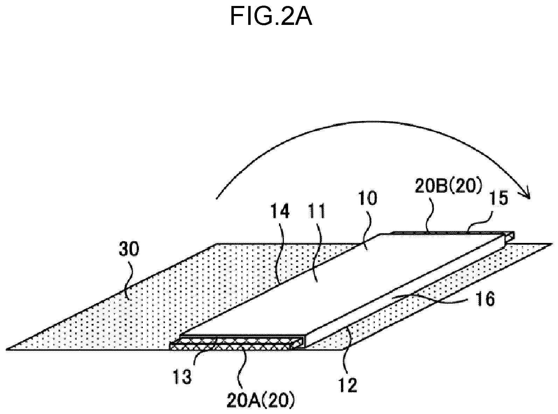

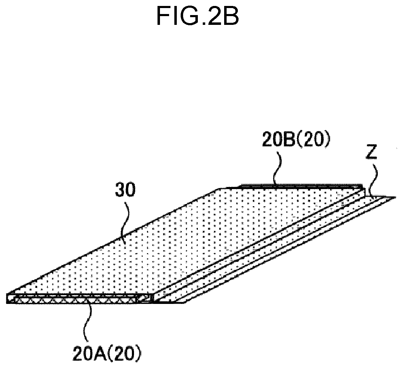

Figs. 2A and 2B are schematic perspective views illustrating the electrode body, the side face members, and a laminate film of the present disclosure. As shown in Fig. 2A, a laminate film 30 is, for example, a single film. Furthermore, as shown in Figs. 2A and 2B, the laminate film 30 is folded so as to cover the entirety of the bottom surface part 12, the second side surface part 14, the top surface part 11, and the fourth side surface part 16 of the electrode body 10. Further, in Fig. 2B, at least a part of the first side face member 20A and at least a part of the second side face member 20B are positioned inside the folded laminate film 30.

Fig. 3A is a schematic side view illustrating the electrode body and a side face member of the present disclosure, and Fig. 3B is a cross-sectional view along line A-A of Fig. 3A. As shown in Figs. 3A and 3B, in a case in which the electrode body 10 and the side face member 20 are observed from the side of the side face member 20, the outer edge E2 of the side face member 20 is positioned further toward an inner side than the outer edge E1 of the electrode body 10. That is, the dimensions of the side face member 20 are smaller than the dimensions of the electrode body 10. By adopting this dimensional relationship, contact between adjacent side face members 20 can be prevented when plural batteries are layered, for example. By preventing contact between adjacent side face members 20, damage to the battery is less likely to occur.

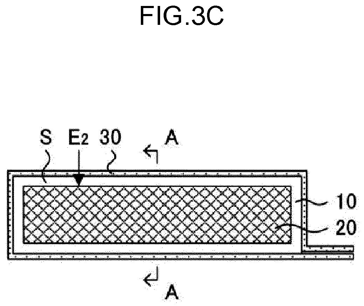

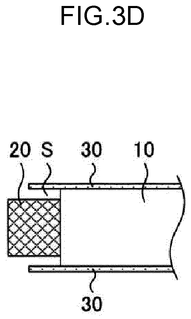

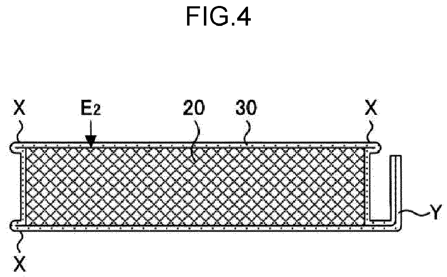

Fig. 3C is a schematic side view illustrating the electrode body, the side face member, and the laminate film of the present disclosure, and Fig. 3D is a cross-sectional view along line A-A of Fig. 3C. In Figs. 3C and 3D, the side face member is shown in a state prior to being sealed by the laminate film. As shown in Figs. 3C and 3D, in a case in which the electrode body 10, the side face member 20, and the laminate film 30 are observed from the side of the side face member 20, a space S is formed between the laminate film 30 and the side face member 20. Therefore, in a case in which the side face member 20 is sealed with the laminate film 30, a method exists in which, as shown in Fig. 4, an excess portion of the laminate film 30 is folded and the inner surfaces thereof are fused to form a fused part X, whereby sealing is effected. However, by forming the fused part X, a bent part is formed that is bent at the starting point of the fused part X at the side of the side face member 20, and there are cases in which the laminate film 30 is damaged at this bent part.

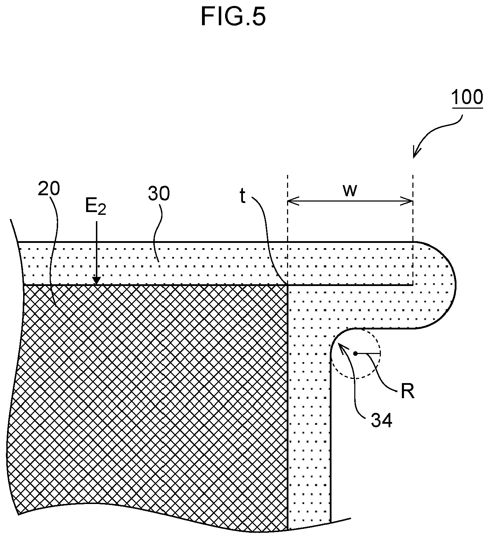

In contrast, as shown in Fig. 5, in the battery of the present disclosure, a bent part 34 at the starting point of the fused part X at the side of the side face member 20 has a curved shape.

According to the present disclosure, since the bent part 34 at the starting point of the fused part X at the side of the side face member 20 has a curved shape, concentration of stress at a specific location of the bent part 34 is suppressed, and a battery is obtained in which damage to the bent part 34 of the fused part X in the laminate film 30 is suppressed.

1. Battery Configuration

The battery of the present disclosure is provided with at least an electrode body, a side face member, and a laminate film.

(1) Electrode body

The electrode body of the present disclosure functions as a power generation element of the battery. The shape of the electrode body is not particularly limited, and for example, as shown in Fig. 1A, a top surface part 11, a bottom surface part 12 opposing the top surface part 11, and four side surface parts connecting the top surface part 11 to the bottom surface part 12 (first side surface part 13, second side surface part 14, third side surface part 15, and fourth side surface part 16) are included. Both the top surface part 11 and the bottom surface part 12 correspond to the main surfaces of the electrode body, and the normal direction of the main surface can be defined as the thickness direction. Furthermore, the first side surface part 13 and the third side surface part 15 are arranged in opposition to each other. Similarly, the second side surface part 14 and the fourth side surface part 16 are arranged in opposition to each other.

The shape of the top surface part is not particularly limited, and examples thereof include quadrangles such as a square, a rectangle, a diamond, a trapezoid, and a parallelogram. The shape of the top surface part 11 in Fig. 1A is rectangular. Furthermore, the shape of the top surface part may be a polygon other than a quadrangle, or may be a shape having a curve such as a circle. Furthermore, the shape of the bottom surface part is the same as the shape of the top surface part. The shape of the side surface part is not particularly limited, and examples thereof include quadrangles such as a square, a rectangle, a diamond, a trapezoid, and a parallelogram.

(2) Side face member

The side face member of the present disclosure is arranged at the side face part of the electrode body. The battery of the present disclosure, relative to one electrode body, may be provided with one side face member, or two or more side face members may be provided. In the latter case, as shown, for example, in Fig. 1B, a pair of side surface members 20 (a first side surface member 20A and a second side surface member 20B) may be arranged in opposition relative to the electrode body 10. Furthermore, in Fig. 1B, a pair of side face members 20 are arranged in opposition to each other along the longitudinal direction of the electrode body 10. Further, although not specifically shown, the pair of side face members may be arranged in opposition to each other along the short-side direction of the electrode body.

The shape of the side face member is not particularly limited, and examples thereof include quadrangles such as a square, a rectangle, a diamond, a trapezoid, and a parallelogram. The shape of the side face member 20 in Fig. 3A is rectangular. In this rectangular shape, the short side extends in a direction parallel to the thickness direction $D_T$, and the long side extends in a direction perpendicular to the thickness direction $D_T$. Furthermore, the shape of the side face member may be a polygon other than a quadrangle, or may be a shape having a curve such as a circle. Furthermore, the side face member may have a corner part at which two sides (straight sides) intersect.

When the battery is viewed from the side of the side face member, the outer edge of the side face member is positioned further toward an inner side than the outer edge of the electrode body. For example, as shown in Fig. 3A, the outer edge E2 of the side face member 20 is positioned further inside than the outer edge E1 of the electrode body 10. In other words, the outer edge E2 of the side face member 20 is encompassed by the outer edge E1 of the electrode body 10 around the entire perimeter thereof. Furthermore, the dimensions of the side face member 20 are smaller than the dimensions of the electrode body 10.

For example, in Fig. 3A, the length (total perimeter length) of the outer edge E1 of the electrode body 10 is defined as L1, and the length (total perimeter length) of the outer edge E2 of the side face member 20 is defined as L2. The ratio of L2 to L1 (L2/L1) is, for example, 0.7 or more but less than 1, and may be 0.8 or more but 0.95 or less. Furthermore, for example, in Fig. 3A, the length of the outer edge E1 in the thickness direction $D_T$ is defined as La, and the length of the outer edge E2 in the thickness direction $D_T$ is defined as Lb. The ratio of Lb to La (Lb/La) is, for example, 0.5 or more but less than 1, and may be 0.8 or more but 0.95 or less. Furthermore, for example, in Fig. 3A, the length of the outer edge E1 in the direction orthogonal to the thickness direction $D_T$ is defined as Lc, and the length of the outer edge E2 in the direction orthogonal to the thickness direction $D_T$ is defined as Ld. The ratio of Ld to Lc (Ld/Lc) is, for example, 0.5 or more but less than 1, and may be 0.8 or more but 0.95 or less. Furthermore, for example, in Fig. 3A, the length of the gap between the outer edge E1 and the outer edge E2 is defined as δ. δ may be greater than 0 mm, greater than or equal to 0.3 mm, and greater than or equal to 0.5 mm. Further, δ is, for example, 1.5 mm or less.

(3) Laminate film

The laminate film of the present disclosure covers the electrode body and seals the electrode body together with the side face member. As shown in Figs. 2A and 2B, in a case in which the electrode body 10 and the side face member 20 are observed from the side of the side face member 20, the laminate film 30 is arranged so as to cover the surface configuring the above-described outer edge of the side face member 20 and the surface configuring the above-described outer edge of the electrode body 10.

Furthermore, as shown in Fig. 4, a fused part X at which the inner surfaces of the laminate film 30 are fused together is arranged at the side face member 20. It is preferable that the fused surface in the fused part X has no cavities. As shown in Fig. 5, in the fused part X, the bent part 34 at the starting point at the side of the side face member has a curved shape. As a result, damage to the fused part X in the laminate film 30 at the bent part 34 can be suppressed. Here, the curved shape refers to a shape which is continuously curved without any angles that can be visually confirmed.

Furthermore, in Fig. 4, an end part adhesion part Y, at which end parts of the laminate film 30 are fused to each other, is provided. The end part adhesion part Y may be folded in accordance with the shape of the side face member 20. This is because excess space can be reduced thereby.

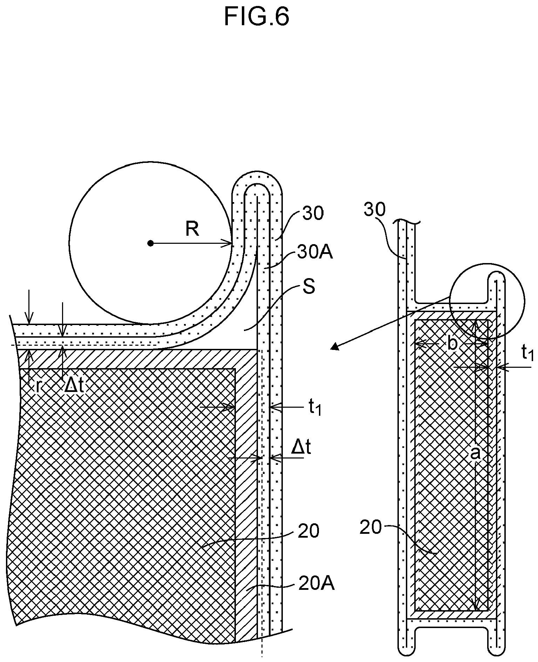

Here, the radius of curvature R of the curved shape of the bent part 34 of the fused part X is described with reference to Fig. 6.

The radius of curvature R of the curved shape in the bent part 34 preferably satisfies the following Formula (1).

$$\text{Formula (1): } R < (((2\Delta t(a+b+4t_1))/(4-\pi))^{1/2})-r$$

The respective symbols in Formula (1) represent the following.

a: width (mm) of the side face member 20
b: thickness (mm) of the side face member 20
$t_i$: sum of the average thickness of a fusing resin layer 30A and the average thickness of a coating resin layer 20A prior to fusing (mm)
$t_2$: sum of the average thickness of the fusing resin layer 30A and the average thickness of the coating resin layer 20 A after fusing at the fused part (mm)
$\Delta t$: $t_i - t_2$,
r: average thickness (mm) of the laminate film 30
R: radius of curvature (mm) of the curved shape in the bent part 34

However, the radius of curvature R of the curved shape in the bent part 34 satisfies the following Formula (3); that is, the radius of curvature R is less than 1/2 of the thickness b of the side face member 20.

$$\text{Formula (3): } R < b/2$$

The respective symbols in Formula (3) represent the following.

b: thickness (mm) of the side face member 20
R: radius of curvature (mm) of the curved shape in the bent part 34

Examples of the laminate film 30 include an embodiment having a metal layer and a fusing resin layer 30A at an inner surface side, forming a fusing part. Furthermore, in order to enhance the sealing property with the laminate film 30, examples include an embodiment in which the side face member 20 has a coating resin layer 20A at the surface that contacts the laminate film 30. When the bent part 34 at the starting point of the fused part X at the side of the side surface member 20 is configured with a curved shape, a space S is formed inside the curved shape of the bent part 34. Further, this space S is preferably filled with resin from the fusing resin layer 30A of the laminate film 30 and the coating resin layer 20A of the side face member 20, such that no cavity is produced. In this regard, when the radius of curvature R of the curved shape in the bent part 34 satisfies Formula (1), the space S can be favorably filled with resin, whereby generation of cavities can be suppressed.

For example, in a case in which:

width a of the side face member 20: 63 mm,
thickness b of the side face member 20: 2.5 mm,
sum $t_i$ of the average thickness of the fusing resin layer 30A and the average thickness of the coating resin layer 20A prior to fusing: 0.18mm,
$\Delta t$: 0.05 mm, which is the difference ($t_1-t_2$) between the above-noted $t_i$ and the sum $t_2$ of the average thickness of the fusing resin layer 30A and the average thickness of the coating resin layer 20A at the fused part after fusing, and average thickness r of the laminate film 30: 0.153 mm,
when calculated by substituting into Formula (1), R < 2.62 mm. However, in order that Formula (3) is also satisfied, R < 1.25 mm is preferable.

Furthermore, it is more preferable that the radius of curvature R of the curved shape in the bent part 34 satisfies the following Formula (2).

$$\text{Formula (2): } R < (((((a+2t_1)(b+2t_1)-ab)\times 0.05)/(4-\pi))^{1/2})-r$$

The respective symbols in Formula (2) represent the following.

a: width (mm) of the side face member 20
b: thickness (mm) of the side face member 20
$t_i$: sum of the average thickness of a fusing resin layer 30A and the average thickness of a coating resin layer 20A prior to fusing (mm)
r: average thickness (mm) of the laminate film 30
R: radius of curvature (mm) of the curved shape in the bent part 34

However, the radius of curvature R of the curved shape in the bent part 34 satisfies the following Formula (3); that is, the radius of curvature R is less than 1/2 of the thickness b of the side face member 20.

$$\text{Formula (3): } R < b/2$$

b: thickness (mm) of the side face member 20
R: radius of curvature (mm) of the curved shape in the bent part 34

In a case in which the bent part 34 at the starting point of the fused part X at the side of the side face member 20 is configured with a curved shape, a space S is formed inside the curved shape of the bent part 34, and this space S is filled with resin from the fusing resin layer 30A and the coating resin layer 20A. However, since resins easily absorb moisture, from the viewpoint of water barrier properties in batteries, it is preferable that the volume of the space S (that is, the amount of resin filling the space S) be small. Specifically, it is preferable that an increase in the water absorption amount due to an increase in the volume of the space S be 5% or less. In this regard, when the radius of curvature R of the curved shape in the bent part 34 satisfies Formula (2), the amount of water absorbed by the resin filling the space S can be reduced, and water barrier properties can be maintained.
For example, in a case in which:

width a of the side face member 20: 63 mm,
thickness b of the side face member 20: 2.5 mm,
sum $t_i$ of the average thickness of the fusing resin layer 30A and the average thickness of the coating resin layer 20A prior to fusing: 0.18mm, and
average thickness r of the laminate film 30: 0.153 mm,
it is preferable that R < 1.02 mm from calculation by substitution into Formula (2).

Conversely, the lower limit value of the radius of curvature R of the curved shape in the bent part 34 is preferably equal to or greater than the average thickness of the metal layer in the laminate film. As the radius of curvature R decreases (the curvature becomes tighter), stress concentration occurs, whereby damage to the laminate film is more likely to occur; however, when the radius of curvature R is greater than or equal to the average thickness of the metal layer, damage to the laminate film can be more favorably suppressed.
Furthermore, as shown in Fig. 5, it is preferable that the fused part X has no crease marks in regions other than the bent part 34. In a case of sealing the electrode body 10 and the side face member 20 with the laminate film 30, a fold line may be provided in advance with respect to the laminate film 30 at a position opposing the corner of the electrode body 10. When a fold line is applied to the laminate film 30, a fold line may be provided at a position opposing the side face member 20 on an extension line thereof in addition to at a position opposing the corner of the electrode body 10. However, a fold line provided at the position opposing the side face member 20 will remain as a crease mark in a region other than the bent part 34 when forming the fused part X. When the fused part X has this crease mark, damage to the laminate film 30 may occur at the crease mark. Therefore, damage to the laminate film 30 at regions other than the bent part 34 can be suppressed by eliminating crease marks from regions other than the bent part 34.

In Fig. 5, in a case in which the battery 100 is viewed laterally from the side of the side face member 20, the fused part X is arranged at a corner part configuring the outer edge E2 of the side face member 20. Specifically, the corner part configuring the outer edge E2 of the side face member 20 coincides with the end part t of the fused surface of the fused part X. Furthermore, as shown in Fig. 5, the width of the fused surface in the fused part X is defined as w. The width w is, for example, 0.1 mm or more, may be 0.3 mm or more, and may be 0.6 mm or more. Further, the width w is, for example, 1.2 mm or less.

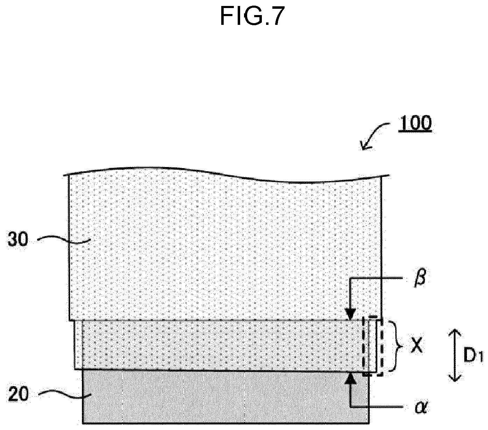

As shown in Fig. 7, in a case in which the battery 100 is viewed in plan view from the thickness direction, the end position of the laminate film 30 at the side of the side face member 20 is denoted by $\alpha$, and the position of the laminate film 30 corresponding to the boundary between the side face member 20 and the electrode body 10 is denoted by $\beta$. The fused part X in Fig. 7 is continuously disposed from the end position $\alpha$ to the position $\beta$. Further, when the direction in which the side face member 20 extends from the electrode body 10 is denoted by Di, it is preferable that the fused part X be disposed along the direction Di. Further, the fused part X may be disposed in at least a part of the region from the end position $\alpha$ to the position $\beta$ in the direction Di. The length of the fused part X in the direction Di is, for example, 1 mm or more, and may be 3 mm or more, or 5 mm or more.

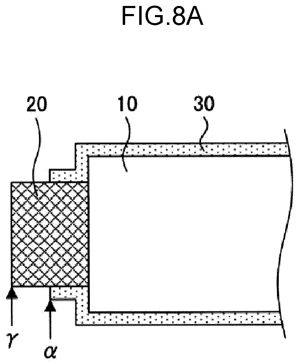

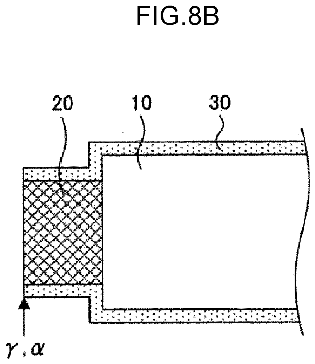

As shown in Fig. 8A, the end position $\alpha$ of the laminate film 30 at the side of the side face member 20 may be closer to the electrode body 10 than the end position $\gamma$ of the side face member 20 at the opposite side from the electrode body 10. In other words, when the battery is viewed in plan view from the thickness direction, the laminate film 30 may cover a part of the side face member 20. In this case, a part of the side face member 20 (a part not covered by the laminate film 30) is exposed. Further, as shown in Fig. 8B, the end position $\alpha$ may coincide with the end position $\gamma$. In other words, when the battery is viewed in plan view from the thickness direction, the laminate film 30 may cover the entire side face member 20.

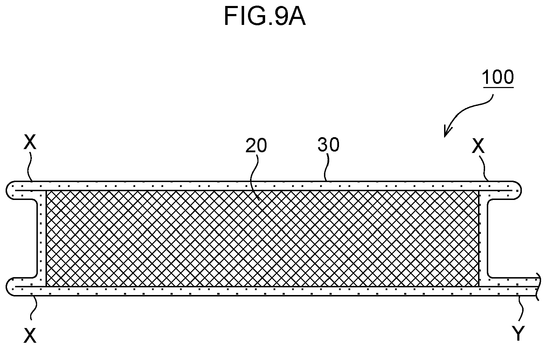

Figs. 9A to 9C are schematic side views of a part of the battery 100 as viewed laterally from the side of the side face member 20. As shown in Fig. 9A, the fused part X is arranged at a corner part configuring an outer edge of the side face member 20. Fig. 9A shows a battery 100 having an end part adhesion part Y and three fused parts X. However, one fused part X may be arranged with respect to one side face member 20, or two or more fused parts X may be arranged. Among these options, it is preferable that plural fused parts X be arranged with respect to the side face member 20. This is because the excess portion of the laminate film 30 can be dispersed and absorbed thereby. Furthermore, in the end part adhesion part Y in Fig. 9A, the end parts of the laminate film 30 are fused together by bringing their inner surfaces into contact with each other.

In the present disclosure, when the battery 100 has plural fused parts X, in one or more fused parts X, the bent part at the starting point at the side of the side face member 20 has a curved shape. In addition, it is preferable that the bent part at the starting point at the side of the side face member 20 has a curved shape in plural fused parts X. It is preferable that the bent part at the starting point at the side of the side face member 20 has a curved shape in all of the fused parts X.

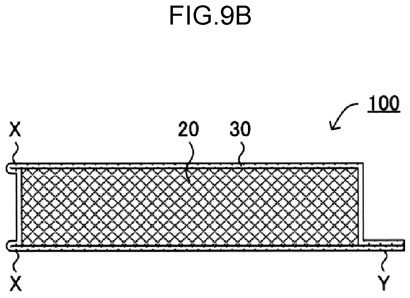

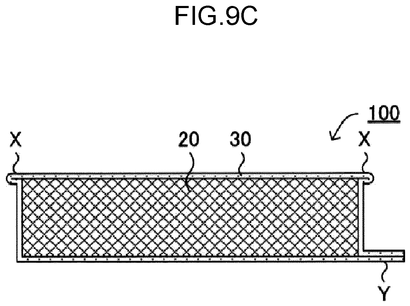

As shown in Fig. 9A, three fused parts X may be respectively arranged at corner parts of respective sides configuring the outer edges of the side face member 20. Furthermore, as shown in Fig. 9B, two fused parts X may be respectively arranged at two corner parts on one short side configuring an outer edge of the side face member 20. Furthermore, as shown in Fig. 9C, two fused parts X may be respectively arranged at two corner parts of one long side configuring an outer edge of the side face member 20.

2. Battery Members

The battery of the present disclosure includes an electrode body, a side face member, and a laminate film.

(1) Electrode body

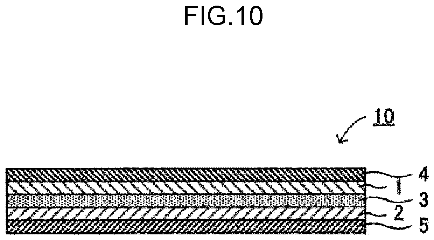

The electrode body of the present disclosure generally has a positive electrode current collector, a positive electrode active material layer, an electrolyte layer, a negative electrode active material layer, and a negative electrode current collector in this order in the thickness direction. For example, the electrode body 10 shown in Fig. 10 has a positive electrode current collector 4, a positive electrode active material layer 1, an electrolyte layer 3, a negative electrode active material layer 2, and a negative electrode current collector 5 in this order in the thickness direction.

The positive electrode active material layer contains at least a positive electrode active material. The positive electrode active material layer may further contain at least one of a conductive material, an electrolyte, and a binder. Examples of the positive electrode active material include oxide active materials. Examples of the oxide active materials include rock-salt layered active materials such as $LiNi_{1/3}Co_{1/3}Mn_{1/3}O_2$, spinel-type active materials such as $LiMn_2O_4$, and olivine-type active materials such as $LiFePO_4$. Furthermore, sulfur (S) may be used as the positive electrode active material. The shape of the positive electrode active material is, for example, particulate.

Examples of the conductive material include carbon materials. The electrolyte may be a solid electrolyte or a liquid electrolyte. The solid electrolyte may be an organic solid electrolyte such as a gel electrolyte, or may be an inorganic solid electrolyte such as an oxide solid electrolyte or a sulfide solid electrolyte. Furthermore, the liquid electrolyte contains, for example, a support salt such as $LiPF_6$ and a solvent such as a carbonate-based solvent. Examples of the binder include rubber-based binders and fluoride-based binders.

The negative electrode active material layer contains at least a negative electrode active material. The negative electrode active material layer may further contain at least one of a conductive material, an electrolyte, and a binder. Examples of the negative electrode active material include metal active materials such as Li and Si, carbon active materials such as graphite, and oxide active materials such as $Li_4Ti_5O_{12}$. The shape of the negative electrode active material is, for example, particulate or foil-shaped. The conductive material, the electrolyte, and the binder are the same as those described above.

The electrolyte layer is arranged between the positive electrode active material layer and the negative electrode active material layer, and contains at least an electrolyte. The electrolyte may be a solid electrolyte or a liquid electrolyte. The electrolyte is the same as the content described above. The electrolyte layer may have a separator.

The positive electrode current collector performs collection of current at the positive electrode active material layer. Examples of the material of the positive electrode current collector include metals such as aluminum, SUS, and nickel. Examples of the shape of the positive electrode current collector include foil-shaped and mesh-shaped. The positive electrode current collector may have a positive electrode tab for connection to a positive electrode current collection terminal.

The negative electrode current collector performs collection of current at the negative electrode active material layer. Examples of the material of the negative electrode current collector include metals such as copper, SUS, and nickel. Examples of the shape of the negative electrode current collector include foil-shaped and mesh-shaped. The negative electrode current collector may have a negative electrode tab for connection to a negative electrode current collection terminal.

(2) Side face member

The side face member of the present disclosure is disposed at a side face part of the electrode body. The side face member is not particularly limited as long as it is a member that is disposed at a side face part of the electrode body, but is preferably a current collection terminal. A current collection terminal refers to a terminal of at which at least a part is a current collection part. The current collection part is electrically connected, for example, to a tab in the electrode body. The current collection terminal may be entirely a current collection part, or may be partially a current collection part. Furthermore, the side face member may be an exterior member which does not have a current collection function.

Examples of the material of the side face member include a metal such as SUS. Furthermore, examples of the side face member include an embodiment in which the coating resin layer is provided at a face on the surface thereof that contacts the laminate film. Examples of the material of the coating resin layer include olefinic resins such as polypropylene (PP) and polyethylene (PE). The thickness of the coating resin layer is, for example, from 40 μm to 150 μm.

(3) Laminate film

The laminate film of the present disclosure has at least a structure in which a fusing resin layer (heat fusion layer) and a metal layer are laminated; that is, it has a structure in which a fusing resin layer (heat fusion layer) is provided on one surface of the metal layer (inner surface side that forms the fused part). Furthermore, the laminate film may have a fusing resin layer (heat fusion layer), a metal layer, and a resin layer in this order along the thickness direction. Examples of the material of the fusing resin layer (heat fusion layer) include olefinic resins such as polypropylene (PP) and polyethylene (PE). Examples of the material of the metal layer include aluminum, an aluminum alloy, and stainless steel. Examples of the material of the resin layer include polyethylene terephthalate (PET) and nylon. The thickness of the fusing resin layer (heat fusion layer) is, for example, from 40 μm to 100 μm. The thickness of the metal layer is, for example, from 30 μm to 60 μm. The thickness of the resin layer is, for example, from 20 μm to 60 μm. The thickness of the entire laminate film is, for example, from 70 μm to 220 μm.

(4) Battery

The battery of the present disclosure is typically a lithium-ion secondary battery. Examples of the application of the battery include hybrid vehicles (HEVs), plug-in hybrid vehicles (PHEVs), electric vehicles (BEVs), gasoline vehicles, and power supply for vehicles such as diesel vehicles. In particular, it is preferably used as a power supply for driving a hybrid vehicle (HEV), a plug-in hybrid vehicle (PHEV), or an electric vehicle (BEV). Furthermore, the battery of the present disclosure may be used as a power source for a moving body other than an automobile (for example, a railway, a ship, or an aircraft), and it may be used as a power source for an electrical product such as an information processing apparatus.

B. Battery module

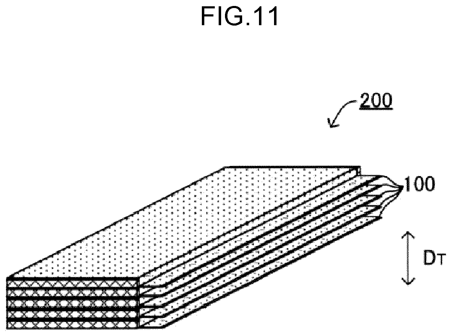

Fig. 11 is a schematic perspective view illustrating the battery module of the present disclosure. The battery module 200 shown in Fig. 11 has plural batteries 100 layered in the thickness direction $D_T$. The battery 100 is the battery described above under "A. Battery".

According to the present disclosure, by using the battery described above, the battery module is such that damage at a bent part at a starting point of the fused part in the laminate film at the side of the side face member is suppressed.

Since the battery of the present disclosure is the same as described above under "A. Battery", description thereof is omitted. Furthermore, the battery module of the present disclosure may have a restraining jig which restrains the plural batteries in the thickness direction. The type of restraining jig is not particularly limited, and examples thereof include a jig which applies a restraining torque via a bolt. The restraining pressure applied by the restraining jig is, for example, from 1 MPa to 50 MPa.

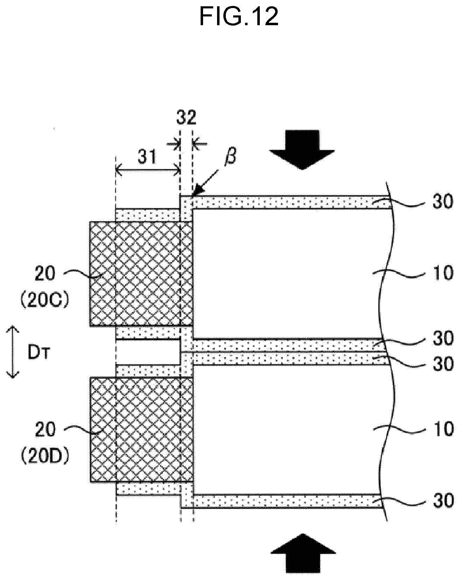

As shown in Fig. 12, the laminate film 30 arranged on the side face member 20 has a main surface part 31 and a wall part 32. The wall part 32 is positioned between the main surface part 31 and the position $\beta$ of the laminate film 30 corresponding to the boundary between the side face member 20 and the electrode body 10. Further, when restraining pressure is applied to the battery by the restraining jig, the battery is compressed in the thickness direction. In such a situation, at a pair of side face members 20 (20C, 20D) that are adjacent in the thickness-direction $D_T$, it is preferable that the main surface part 31 of the laminate film 30 arranged on one side face member 20C and the main surface part 31 of the laminate film 30 arranged on the other side face member 20D do not contact each other. This is so that damage due to contact can be prevented. Further, in a case in which the fused part is arranged on the main surface part of the laminate film, the fused part is included in the main surface part of the laminate film. In other words, the fused part arranged on the main surface part of the laminate film preferably does not contact the main surface part of the laminate film arranged on the other side face member.

C. Method of Manufacturing Battery

A method of manufacturing a battery according to the present disclosure is a method for producing the battery described above, and includes: a preparation process of preparing a structure having the electrode body described above and the side face member described above; a first covering process of covering the above-described outer edge of the above-described electrode body in the above-described structure with the above-described laminate film; and a second covering process of covering the above-described outer edge of the above-described side face member in the above-described structure with the above-described laminate film, the fused part being formed in the above-described second covering process by using a jig capable of surface contact with a surface configuring the above-described outer edge of the above-described side face member. In the preparation process, in a case in which the battery is viewed from the side of the side face member, the shape of the side face member is rectangular, and a structure having a first side, a second side adjacent to the first side, and a third side adjacent to the second side and opposing the first side, and a fourth side adjacent to the third side and opposing the second side, may be prepared as the rectangular shape. In this case, the second covering process has a first adhesion process in which a first jig and a third jig are pushed inward from the side of the first side and the side of the third side of the side face member, respectively, and the laminate film is adhered to the first side and the third side, respectively, and after the first adhesion process, a second adhesion process in which a second jig and a fourth jig are pushed inward from the side of the second side and the side of the fourth side of the side face member, respectively, and the laminate film is adhered to the second side and the fourth side, respectively, and it is preferable that at least one of the first jig and the third jig has a chamfered shape at a portion that forms the curved shape of the bent part at the fused part.

1. Preparation process

The preparation process in the present disclosure is a process of preparing a structure having the above-described electrode body and the above-described side face member. The electrode body and the side face member are the same as those described above under "A. Battery", and therefore, description thereof is omitted.

## 2. Folding process

In the present disclosure, prior to performing the first covering process, a process of applying a fold line in advance to the laminate film at a position opposing a corner part of the electrode body-specifically, a folding process in which folding is performed in advance in accordance with the shape of the electrode body-may be included.

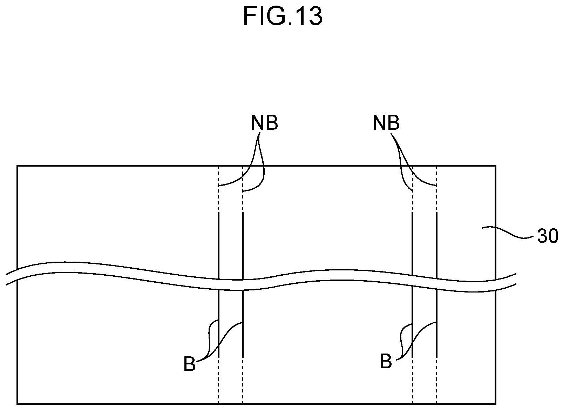

However, as shown in Fig. 13, in the folding process, it is preferable that no fold line be provided at a position of the laminate film 30 opposing the side face member (that is, it is preferable to configure this as non-bend part NB). In the folding process, a position opposing the corner part of the electrode body is bent (that is, configured as bent part B), and further, a fold line can also be provided at a position opposing the side face member on an extension line thereof. However, a fold line provided at a position opposing the side face member remains as a crease mark in a region other than the bent part when forming the fused part X. When the fused part X has this crease mark, damage to the laminate film may occur at the crease mark. For this reason, in the folding process, a fold line is not provided at a position of the laminate film opposing the side face member. As a result, it is preferable that the fused part X has a structure in which it does not have a crease mark in a region other than the bent part. As a result, damage to the laminate film due to a crease mark in a region other than the bent part of the fused part X can be suppressed.

## 3. First covering process

In the first covering process of the present disclosure, the above-described outer edge of the above-described electrode body in the above-described structure is covered with the above-described laminate film. For example, as shown in Figs. 2A and 2B, in the first covering process, the surface configuring the above-described outer edge of the electrode body 10 (for example, the bottom surface part 12, the second side surface part 14, the top surface part 11, and the fourth side surface part 16) is covered with a laminate film 30. At this time, the electrode body 10 and the laminate film 30 may be adhered to each other. Further, as shown in Fig. 2B, the end part overlapping part Z, at which the respective end parts of the laminate film 30 overlap with each other, is heated. As a result, the end part adhesion part Y, at which the respective end parts of the laminate film 30 are fused to each other, is formed.

Furthermore, in the first covering process, normally, as shown in Figs. 3C and 3D, a space S is formed between the laminate film 30 and the side face member 20. This space S disappears in the second covering process, which is described below, and the fused part is formed in its place.

## 4. Second covering process

In the second covering process of the present disclosure, the surface configuring the above-described outer edge of the above-described side face member is covered with the above-described laminate film. Further, in the second covering process, the fused part is formed.

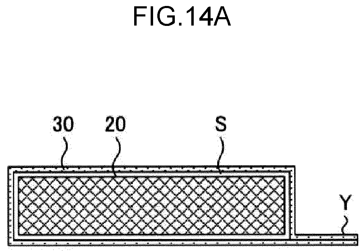

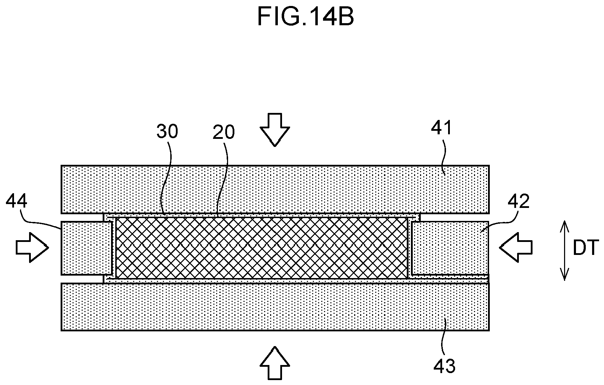

In the second covering process, the side face member and the laminate film are adhered to each other using a jig capable of surface contact with the surface configuring the outer edge of the side face member. Figs. 14A to 14C are schematic side views illustrating the second covering process of the present disclosure. As shown in Fig. 14A, a space S is formed between the laminate film 30 and the side surface member 20 by the first covering process described above. Furthermore, the end part adhesion part Y is formed by the first covering process described above. Next, as shown in Fig. 14B, a jig 41, jig 42, jig 43, and jig 44 are pushed in toward the laminate film 30 and the side face member 20. In the thickness direction $D_T$, the length of the jig 42 (the length in the vertical direction in the drawing) is shorter than the length of the side face member 20 (the length in the vertical direction in the drawing). As a result, a gap is formed between the jig 41 and the jig 42, and the excess portion of the laminate film 30 is gathered in the gap. As a result, as shown in Fig. 14B, the fused part X is formed. Fig. 9A shows a state in which the fused part X is formed. The jigs 41 and 43 are preferably heated, and the jigs 42 and 44 may also be heated.

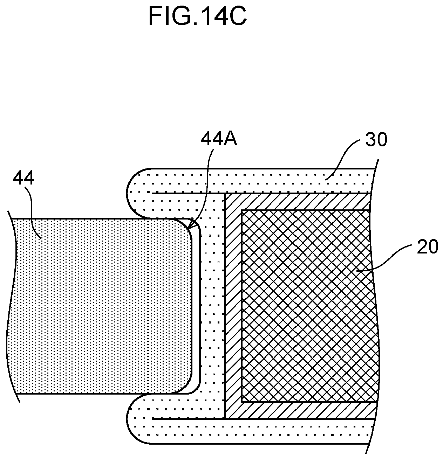

In the jig 44 of the present disclosure, a part (a part opposing the bent part) 44A, which forms the curved shape of the bent part of the fused part X, has a chamfered shape. In other words, as shown in Fig. 14C, the jig 44 is formed such that the corner of the part 44A, which forms the curved shape of the bent part of the fused part X, has a curved shape. As a result, the bent part at the starting point of the formed fused part X at the side of the side surface member can be imparted with a curved shape. Here, the jig 42 of the present disclosure, too, similarly has a part (a part opposed to the bent part) 44A, which forms the curved shape of the bent part in the fused part X, that has a chamfered shape.

The radius of curvature C of the chamfered portion of the jig preferably satisfies the following formulae (1') and (3').

$$\text{Formula (1'): } C < (((2\Delta t(a+b+4t_1))/(4-\pi))^{1/2})-r$$

$$\text{Formula (3'): } C < b/2$$

The respective symbols in Formula (1') and Formula (3') represent the following.

a: width of side face member (mm)
b: thickness of side face member (mm)
ti: sum of the average thickness of the fusing resin layer and the average thickness of the coating resin layer before fusion (mm)
$t_2$: sum of the average thickness of the fusing resin layer and the average thickness of the coating resin layer after fusion at the fused part (mm)
$\Delta t$: to ti - $t_2$,
r: average thickness of laminate film (mm)
C: radius of curvature of chamfered portion of jig (mm)

Furthermore, it is more preferable that the radius of curvature C of the chamfered portion of the jig satisfies the following formulae (2') and (3').

$$\text{Formula (2'): } C < (((((a+2t_1)(b+2t_1)-ab)\times 0.05)/(4-\pi))^{1/2})-r$$

$$\text{Formula (3'): } C < b/2$$

The respective symbols in Formula (2') and Formula (3') represent the following.

a: width of side face member (mm)
b: thickness of side face member (mm)
ti: sum of the average thickness of the fusing resin layer and the average thickness of the coating resin layer before fusion (mm)
r: average thickness of laminate film (mm)
C: radius of curvature of chamfered portion of jig (mm)

Further, it is preferable that the radius of curvature C of the chamfered portion of the jig be equal to or greater than the average thickness of the metal layer.
Here, an embodiment in which the jig 41, the jig 42, the jig 43, and the jig 44 are pushed in toward the laminate film 30 and the side face member 20 is described. When the side view shape of the side face member is rectangular, the second covering process may have a first adhesion process and a second adhesion process.
For example, as shown in Fig. 14B, the side view shape of the side face member 20 is rectangular, the short sides (the sides that oppose in the left-right direction at the outer edge of the side face member 20 in Fig. 14 B) in this rectangle are designated the first side and the third side, and the long sides (the sides that oppose in the vertical direction at the outer edge of the side face member 20 in Fig. 14 B) of the rectangle are designated the second side and the fourth side. In other words, the rectangle has a first side, a second side adjacent the first side, a third side adjacent the second side and opposite the first side, and a fourth side adjacent the third side and opposite the second side. The first side and the third side correspond to short sides configuring an outer edge of the side face member 20, and the second side and the fourth side correspond to long sides configuring the outer edge of the side face member 20.
First, the jig 42 and the jig 44 are pushed in from the side of the first side and the third side of the side face member 20, respectively. As a result, the laminate film 30 is adhered to the first side and the third side, respectively (first adhesion process). Next, the jig 41 and the jig 43 are pushed in from the side of the second side and the fourth side of the side face member 20, respectively. As a result, the laminate film 30 is adhered to the second side and the fourth side, respectively (second adhesion process). As a result, as shown in Fig. 9A, the fused part X is formed.
In the present disclosure, it is preferable that the first side and the third side correspond to short sides configuring the outer edge of the side face member 20, and the second side and the fourth side correspond to long sides configuring the outer edge of the side face member 20. In this case, in the first adhesion process, the jig 42 and the jig 44, which are not heated, may be pushed in, and in the second adhesion processing, the heated jig 41 and the jig 43 may be pushed in. By heating the entire periphery of the outer edge of the side face member 20 only by heat input from the jigs on the long sides (the jig 41 and the jig 43), the structure of the sealing machine can be simplified.

5. Battery

The battery obtained by the above-described processes is the same as the battery described above under "A. Battery", and therefore, description thereof is omitted.

The present disclosure is not limited to the embodiments described above. The above-described embodiments are exemplary, and embodiments having substantially the same configuration as the technical concepts recited in the claims of the present disclosure and exhibiting the same action and effect are all encompassed by the technical scope of the present disclosure.

**Claims**

1.  A battery (100), comprising:

   an electrode body (10);
   a side face member (20) disposed at a side face of the electrode body (10); and
   a laminate film (30) covering the electrode body (10) and the side face member (20), wherein:

      in a case in which the battery (100) is viewed laterally from a side of the side face member (20), an outer edge of the side face member (20) is disposed further toward an inner side than an outer edge of the electrode body (10),
      the laminate film (30) is disposed so as to cover a face configuring the outer edge of the side face member (20) and a face configuring the outer edge of the electrode body (10),
      a fused part (X), at which respective inner faces of the laminate film (30) are fused together, is disposed on the side face member (20), and
      a bent part (34) at a starting point of the fused part (X) at a side of the side face member (20) has a curved shape.

2.  The battery (100) according to claim 1, wherein the laminate film (30) has a metal layer and a fusing resin layer (30A) at an inner face side that forms the fused part (X), and the side face member (20) has a coating resin layer (20A) at a face that contacts the laminate film (30).

3.  The battery (100) according to claim 2, wherein a radius of curvature R of the curved shape in the bent part (34) satisfies the following Formula (1) and Formula (3):

$$\text{Formula (1): } R < (((2\Delta t(a+b+4t_1))/(4-\pi))^{1/2})\text{-}r$$

$$\text{Formula (3): } R < b/2$$

wherein, in the Formula (1) and the Formula (3):

   a is a width of the side face member (20) (mm),
   b is a thickness of the side face member (20) (mm),
   $t_i$ is a sum of an average thickness of the fusing resin layer (30A) and an average thickness of the coating resin layer (20A) prior to fusion (mm),
   $t_2$ is a sum of an average thickness of the fusing resin layer (30A) and an average thickness of the coating resin layer (20A) after fusion at the fused part (X),
   $\Delta t$ is equal to $t_i$ - $t_2$,
   r is an average thickness of the laminate film (30), and
   R is the radius of curvature of the curved shape in the bent part (34).

4.  The battery (100) according to claim 2 or 3, wherein a radius of curvature R of the curved shape in the bent part (34) satisfies the following Formula (2) and Formula (3):

$$\text{Formula (2): } R < (((((a+2t_1)(b+2t_1)\text{-}ab)\text{x}0.05)/(4-\pi))^{1/2})\text{-}r$$

## Formula (3): R < b/2

wherein, in the Formula (2) and the Formula (3):

a is a width of the side face member (20) (mm),
b is a thickness of the side face member (20) (mm),
ti is a sum of an average thickness of the fusing resin layer (30A) and an average thickness of the coating resin layer (20A) prior to fusion (mm),
r is an average thickness of the laminate film (30), and
R is the radius of curvature of the curved shape in the bent part (34).

5. The battery (100) according to any one of claim 2 to 4, wherein a radius of curvature R of the curved shape in the bent part (34) is equal to or greater than an average thickness of the metal layer.

6. The battery (100) according to any one of claim 1 to 5, wherein the fused part (X) does not have a folding crease mark at a region other than the bent part (34).

7. The battery (100) according to any one of claim 1 to 6, wherein, in a case in which the battery (100) is viewed in plan view from a thickness direction, the fused part (X) is disposed continuously from an end part position $\alpha$ of the laminate film (30) at the side of the side face member (20) to a position $\beta$ of the laminate film (30) corresponding to a boundary between the side face member (20) and the electrode body (10).

8. The battery (100) according to any one of claim 1 to 7, wherein the fused part (X) is disposed at a corner part of the outer edge of the side face member (20).

9. The battery (100) according to any one of claim 1 to 8, wherein, in a case in which the battery (100) is viewed laterally from the side of the side face member (20), a shape of the side face member (20) is rectangular.

10. The battery (100) according to any one of claim 1 to 9,, wherein a plurality of the fused parts (X) is disposed on the side face member (20).

11. The battery (100) according to any one of claim 1 to 10, wherein: the battery (100) comprises a pair of the side face members (20), and the pair of the side face members (20) is disposed so as to oppose each other relative to the electrode body (10).

12. A battery (100) module, comprising the battery (100) according to any one of claim 1 to 11, wherein a plurality of the batteries is layered in a thickness direction thereof.

13. The battery (100) module according to claim 12, wherein, in a pair of the side face members (20) disposed adjacent to each other in the thickness direction, a main face part of the laminate film (30) disposed on one of the pair of side face members (20) does not contact a main face part of the laminate film (30) disposed on the other of the pair of side face members (20).

14. A method of manufacturing a battery (100), the method comprising:

a preparation process of preparing a structure comprising the electrode body (10) and the side face member (20), wherein, in a case in which the battery (100) is viewed laterally from a side of the side face member (20), a shape of the side face member (20) is a rectangular shape and the rectangular shape has a first side, a second side adjacent the first side, a third side adjacent the second side and opposing the first side, and a fourth side adjacent the third side and opposing the second side;
a first covering process of covering a face configuring the outer edge of the electrode body (10) in the structure with the laminate film (30); and
a second covering process of covering a face configuring the outer edge of the side face member (20) in the structure with the laminate film (30), wherein:

the second covering process comprises:

a first adhesion process of pressing a first jig and a third jig inward from a side of the first side and a side of the third side of the side face member (20), respectively, and adhering the laminate film (30) to the first side and the third side, respectively; and

after the first adhesion process, a second adhesion process of pressing a second jig and a fourth jig inward from a side of the second side and a side of the fourth side of the side face member (20), respectively, and adhering the laminate film (30) to the second side and the fourth side, respectively,

at least one of the first jig or the third jig has a chamfered shape at a portion that forms the curved shape of the bent part (34) in the fused part (X), and

the battery (100) is the battery (100) according to any one of claim 1 to 11.

15. The method of manufacturing a battery (100) according to claim 14, further comprising, after the preparation process and before the first covering process, a folding process of providing in advance a fold line at a position of the laminate film (30) opposing a corner part of the electrode body (10),

wherein, in the folding process, the fold line is not provided at a position of the laminate film (30) opposing the side face member (20).

FIG.1A

FIG.1B

FIG.2A

## FIG.2B

# FIG.3A

FIG.3B

FIG.3C

FIG.3D

EP 4 345 975 A2



## FIG.4

# FIG.5

# FIG.6

# FIG.7

FIG.8A

FIG.8B

$\gamma, \alpha$

# FIG.9A

FIG.9B

FIG.9C

# FIG.10

# FIG.11

# FIG.12

# FIG.13

NB    NB

B    B

30

FIG.14A

# FIG.14B

## FIG.14C

**REFERENCES CITED IN THE DESCRIPTION**

**Patent documents cited in the description**

- JP 2011108623 A